# EUROPEAN PATENT SPECIFICATION

(11) **EP 3 728 435 B1**
(45) Date of publication and mention of the grant of the patent: **09.03.2022**
(21) Application number: 18836883.1
(22) Date of filing: 17.12.2018
(51) Int. Cl.: C08K 3/22, C08K 3/04

(54) **PRODUCT MANUFACTURED WITH A COMPOSITE MATERIAL**
AUS EINEM VERBUNDWERKSTOFF HERGESTELLTES PRODUKT
PRODUIT FABRIQUÉ AVEC UN MATÉRIAU COMPOSITE

(30) Priority: 18.12.2017 EP 17207976
(43) Date of publication of application: 28.10.2020
(73) Proprietor: Gozzini, Palmiro Giuseppe, 25030 Pompiano (Brescia) (IT); Rossi, Marco, 21052 Busto Arsizio (Varese) (IT); Ligato, Alessio, 25019 Sirmione (Brescia) (IT)
(72) Inventor: Gozzini, Palmiro Giuseppe, 25030 Pompiano (Brescia) (IT); Rossi, Marco, 21052 Busto Arsizio (Varese) (IT); Ligato, Alessio, 25019 Sirmione (Brescia) (IT)
(74) Representative: Biggi, Cristina
(86) International application number: PCT/IB2018/060167
(87) International publication number: WO 2019/123197

(56) References cited:
- US-A- 6 083 339
- US-A1- 2015 118 430

## Description

The present invention relates to a product manufactured with a composite material for furnishing bathrooms and kitchens wherein the composite material comprises an acrylic polymer and one or more fillers.

### PRIOR ART

Products for furnishing bathrooms and kitchens are used very often over the day and therefore must be made of materials that fulfil certain requirements. A first requirement regards the mechanical strength of said products. In fact, they are subjected to loads, for example in case of suspended fixtures or bathtubs. Additionally, said products must display good resistance to scratches and impacts.

Furthermore, fixtures and products for furnishing kitchens must be resistant to acids, strong detergents and hydrochloric compounds; in fact, it is not rare to see fixtures with damaged, opaque and/or corroded surfaces due to the continuous wear and tear to which they are subjected on a daily basis. Additionally, said products must be comprised of smooth and easy-to-clean surfaces that comply with hygiene standards.

Fixtures, and in general products for kitchens and bathrooms, are now mainly manufactured with ceramic materials.

The basic ingredients for manufacturing ceramic are raw materials found in nature: kaolinite, clay, feldspar and quartz sand.

Said ingredients are mixed until a paste is obtained which is then poured into moulds. The products thus obtained are then dried, vitrified and finally fired in a furnace at temperatures up to 1240°C.

Ceramic fixtures display good resistance to loading and to chemical agents in general. However, ceramic is often subject to chipping problems which can compromise not only the aesthetics but also the stability of the fixture. Note that ceramic fixtures are often chipped even before being installed, e.g. during transport or while the fixture itself is being placed.

There are also metal, glass and natural stone products for kitchens and bathrooms. Although said materials display very captivating aesthetic characteristics, they are unlikely to reach the necessary requirements for daily and long-lasting use.

US6083669 discloses a process for producing bowls, such as water basins comprising acrylic plastic filled with alumina trihydrate and colorants.

US 2015/0118430 discloses the use of a very low concentration of nanofillers of carbon nanotube in order to improve resistance to UV light of a composite material based on a polymer matrix.

It is therefore still current and necessary to find new materials suitable for manufacturing products for bathrooms and kitchens, particularly fixtures, that display excellent resistance to loading, to the corrosion of chemical agents and to chipping. Furthermore, there is a strongly felt need to have new materials suitable for manufacturing products for bathrooms and kitchens that are provided with antibacterial characteristics.

On this point, the applicant has surprisingly found that a composite material comprising a polymer matrix mixed with at least one filler dispersed in the polymer matrix allows a product to be obtained with high mechanical strength, making it an excellent candidate for manufacturing high quality fixtures.

Furthermore, the product according to the invention displays excellent fireproof capacity and resistance to the main reagents and/or elements of daily use that could be spilled on the product itself. The composite material used to obtain the product according to the invention can be easily processed in a similar way to wood and, as well as being very resistant to chipping, in the event of scratches such marks can be easily removed by sandpapering.

Additionally, the product according to the invention displays high resistance to loading and antibacterial properties. Resistance to loading is a particularly important characteristic in the case of products for fixtures that must be able to withstand the weight of a person, such as for example suspended fixtures.

### SUMMARY OF THE INVENTION

The present invention relates to a product for bathrooms or kitchens manufactured with composite material comprising a polymer matrix, wherein the polymer matrix is an acrylic polymer, mixed with at least one filler dispersed in the polymer matrix.

In particular, the acrylic polymer is a methacrylic polymer, preferably a methyl methacrylic polymer. the at least one filler is a mixture of fullerene, and aluminium hydroxide,

In one embodiment, the composite material of the present invention comprises a polymer matrix of methyl methacrylic polymer mixed with aluminium hydroxide and fullerene.

The application further discloses a method for preparing a composite material comprising a step of mixing at least one filler with a polymer matrix and a step of preparing a product for bathrooms and kitchens, in particular a bathroom fixture.

The products obtained display high resistance to loading and thermal resistance, and resistance to impacts, to scratches and to cuts. Furthermore, the products have antibacterial properties.

Said products can be manufactured with imperceivable junctions that make the surfaces very hygienic in that they do not facilitate the growth of bacteria or fungi. Furthermore, the composite material is inert, non-toxic and nonporous.

### DETAILED DESCRIPTION OF THE INVENTION

A first aspect of the present invention relates to a product manufactured with composite material for furnishing bathrooms and kitchens. Such product is preferably a product for furnishing bathrooms, e.g. a wash basin, bidet, toilet (WC), shower tray, urinal, bathtub, or a product for furnishing a kitchen, e.g. a sink, a worktop and a hob.

The composite material comprises a polymer matrix, preferably an acrylic resin, mixed with at least one filler dispersed inside the polymer matrix.

In a preferred embodiment of the present invention, the acrylic polymer is a methacrylic polymer, preferably a methyl methacrylate.

The acrylic polymer is present in the composite material in a percentage generally comprised between 10 and 60 wt%, preferably between 20 and 50 wt%, even more preferably between 30 and 40 wt%.

The at least one filler is a mixture of fullerene, and aluminium hydroxide, the composite material comprises aluminium hydroxide and fullerene dispersed in the polymer matrix.

The at least one filler is present in mixture in a percentage comprised between 30 and 75 wt%, preferably between 45 and 70 wt%, even more preferably between 55 and 65 wt%.

The composite material further comprises a dye able to change the colour of the product.

Preferably, said dye is selected from: iron oxide, chromium oxide, molybdates, toluidine, ultramarine, prussian blue, phthalocyanine, titanium dioxide, carbon black.

The dye is present in the mixture in a percentage comprised between 0 and 10 wt%, preferably between 0 and 8 wt%, even more preferably between 0 and 6 wt% or between 1 and 4 wt%.

In one embodiment of the invention, the composite material comprises a methacrylic polymer, e.g. methyl methacrylate and aluminium hydroxide.

In one embodiment of the invention, the composite material comprises a methacrylic polymer, e.g. methyl methacrylate and fullerene.

In a second embodiment of the invention, the composite material comprises a methacrylic polymer, e.g. methyl methacrylate, aluminium hydroxide and fullerene.

In a third embodiment of the invention, the composite material comprises a methacrylic polymer, e.g. methyl methacrylate, aluminium hydroxide and a dye.

In a further embodiment of the invention, the composite material comprises a methacrylic polymer, e.g. methyl methacrylate, aluminium hydroxide, fullerene and a dye.

In a preferred embodiment of the invention the composite material comprising a methacrylic polymer, preferably methyl methacrylate, aluminium hydroxide and possibly a dye, is used for manufacturing a fixture, particularly a toilet (WC) and a bidet. The invention therefore relates to a fixture manufactured with composite material comprising a methacrylic polymer, preferably methyl methacrylate, mixed with aluminium hydroxide and possibly a dye. Such fixture is preferably a toilet or a bidet.

In a preferred embodiment of the invention the composite material comprising a methacrylic polymer, preferably methyl methacrylate, aluminium hydroxide, fullerene and possibly a dye is used for manufacturing a bathroom product selected from a wash basin, bidet, toilet (WC), shower tray, urinal, bathtub, or a kitchen product selected from a sink, worktop and hob. The invention therefore relates to a product for bathrooms and kitchens manufactured with composite material comprising a methacrylic polymer, preferably methyl methacrylate, mixed with aluminium hydroxide, fullerene and possibly a dye. Such product for bathrooms is selected from a wash basin, bidet, toilet (WC), shower tray, urinal, bathtub, and such product for kitchens is selected from a sink, a worktop and a hob.

In a preferred embodiment of the invention the composite material comprising a methacrylic polymer, preferably methyl methacrylate, aluminium hydroxide and fullerene is used for manufacturing a product for bathrooms such as a toilet (WC), bidet, bathtub, shower tray and wash basin. The invention therefore relates to a product for bathrooms manufactured with composite material comprising a methacrylic polymer, preferably methyl methacrylate, mixed with aluminium hydroxide and fullerene. Such product for bathrooms is preferably selected from: toilet (WC), bidet, bathtub, shower tray and wash basin.

A second aspect of the present application discloses a process for preparing a product according to the invention. The process comprises a step of mixing a polymer matrix according to the invention with at least one filler in accordance with the present invention. Other optional components may be added during the mixing step to obtain the composite material and the desired product. For example, dyes may be added.

The mixing of the components is performed at ambient temperature for example comprised between 15 and 19°C in a mixer at variable speed or in a centrifuge.

The mixture thus obtained is subsequently inserted in a mould using an extruder with a vacuum pump at a constant speed in order to obtain the shape of the product. The mixture is left to solidify through cooling (for about 30/40 minutes) with average starting temperature after extrusion of about 55/60°C.

### EXAMPLE

40% by weight of acrylic resin (methyl methacrylate polymer), 50% by weight of aluminium hydroxide, 5% by weight of fullerene C60 and 5% of titanium dioxide are mixed until a homogeneous mixture is obtained. The mixture is injected into a mould for a suspended toilet (WC), allowed to cool for about 30 minutes and then removed from the mould.

The fixture thus obtained demonstrated antibacterial properties on the surface due to the presence of fullerene dispersed inside the polymer matrix.

The fixture was subjected to loading tests according to standard UNI EN 997:2012 up to 400 kg demonstrating that it passed the test. For comparison purposes, according to the same standard, a fixture obtained with the same process described above and with the same mixture but without fullerene C60 and with a percentage of aluminium hydroxide equal to 55% by weight was tested. However, this fixture did not pass the loading test, breaking at a load of 280 kg and thus demonstrating that fullerene gives load resistance properties to the product.

## Claims

1. A product for bathrooms or kitchens manufactured with a composite material comprising a polymer matrix and at least one filler dispersed in the polymer matrix, wherein the polymer matrix is an acrylic polymer and the at least one filler is a mixture of aluminium hydroxide and fullerene.

2. The product according to claim 1, wherein the acrylic polymer is a methacrylic polymer, preferably a methyl methacrylic polymer.

3. The product according to claim 1 or 2, where the at least one polymer is present in a percentage comprised between 10 and 60 wt%, preferably between 20 and 50 wt%, even more preferably between 30 and 40 wt%.

4. The product according to any one of the preceding claims, where the at least one filler is present in a percentage comprised between 30 and 75 wt%, preferably between 45 and 70 wt%, even more preferably between 55 and 65 wt%.

5. The product according to any one of the preceding claims, wherein the composite material comprises at least one dye.

6. The product according to claim 5, where the dye is at least one pigment selected from iron oxide, chromium oxide, molybdates, toluidine, ultramarine, prussian blue, phthalocyanine, titanium dioxide and carbon black.

7. The product according to claim 5 or 6, wherein the dye is present in a percentage comprised between 0 and 10 wt%.

8. The product according to claim 7, wherein the dye is present in a percentage comprised between 0 and 8 wt%.

9. The product according to claim 7 or 8, wherein the dye is present in a percentage comprised between 0 and 6 wt%, preferably between 1 and 4 wt%.

10. The product according to any one of the preceding claims, where the product is a product for bathrooms selected from a wash basin, bidet, toilet (WC), shower tray, urinal, bathtub, or a product for kitchens selected from a sink, a worktop and a hob.

## Patentansprüche

1. Produkt für Badezimmer oder Küchen, hergestellt aus einem Verbundwerkstoff, umfassend eine Polymermatrix und mindestens einen in der Polymermatrix dispergierten Füllstoff, wobei die Polymermatrix ein Acrylpolymer ist und der mindestens eine Füllstoff eine Mischung aus Aluminiumhydroxid und Fulleren ist.

2. Produkt nach Anspruch 1, wobei das Acrylpolymer ein Methacrylpolymer ist, vorzugsweise ein Methylmethacrylpolymer.

3. Produkt nach Anspruch 1 oder 2, wobei das mindestens eine Polymer in einem Prozentsatz zwischen 10 und 60 Gew.-%, vorzugsweise zwischen 20 und 50 Gew.-%, noch bevorzugter zwischen 30 und 40 Gew.-% vorhanden ist.

4. Produkt nach einem der vorhergehenden Ansprüche, wobei der mindestens eine Füllstoff in einem Prozentsatz zwischen 30 und 75 Gew.-%, vorzugsweise zwischen 45 und 70 Gew.-%, noch bevorzugter zwischen 55 und 65 Gew.-% vorhanden ist.

5. Produkt nach einem der vorhergehenden Ansprüche, wobei der Verbundwerkstoff mindestens einen Farbstoff umfasst.

6. Produkt nach Anspruch 5, wobei der Farbstoff mindestens ein Pigment ausgewählt aus Eisenoxid, Chromoxid, Molybdaten, Toluidin, Ultramarin, Preußischblau, Phthalocyanin, Titandioxid und Ruß ist.

7. Produkt nach Anspruch 5 oder 6, wobei der Farbstoff in einem Prozentsatz zwischen 0 und 10 Gew.-% vorhanden ist.

8. Produkt nach Anspruch 7, wobei der Farbstoff in einem Prozentsatz zwischen 0 und 8 Gew.-% vorhanden ist.

9. Produkt nach Anspruch 7 oder 8, wobei der Farbstoff in einem Prozentsatz zwischen 0 und 6 Gew.-%, vorzugsweise zwischen 1 und 4 Gew.-% vorhanden ist.

10. Produkt nach einem der vorhergehenden Ansprüche, wobei es sich beim Produkt um ein Produkt für Badezimmer ist, ausgewählt aus einem Waschbecken, Bidet, Toilette (WC), Duschwanne, Urinal, Badewanne oder um ein Produkt für Küchen, ausgewählt aus einem Waschbecken, einer Arbeitsplatte und einem Kochfeld.

## Revendications

1. Produit pour salles de bains ou cuisines fabriqué avec un matériau composite comprenant une matrice polymère et au moins une charge dispersée dans la matrice polymère, dans lequel la matrice polymère est un polymère acrylique et l'au moins une charge est un mélange d'hydroxyde d'aluminium et de fullerène.

2. Produit selon la revendication 1, dans lequel le polymère acrylique est un polymère méthacrylique, de préférence un polymère méthacrylique méthylique.

3. Produit selon la revendication 1 ou 2, où l'au moins un polymère est présent dans un pourcentage compris entre 10 et 60 % en poids, de préférence entre 20 et 50 % en poids, mieux encore entre 30 et 40 % en poids.

4. Produit selon l'une quelconque des revendications précédentes, où l'au moins une charge est présente dans un pourcentage compris entre 30 et 75 % en poids, de préférence entre 45 et 70 % en poids, mieux encore entre 55 et 65 % en poids.

5. Produit selon l'une quelconque des revendications précédentes, dans lequel le matériau composite comprend au moins un colorant.

6. Produit selon la revendication 5, dans lequel le colorant est au moins un pigment choisi parmi l'oxyde de fer, l'oxyde de chrome, les molybdates, la toluidine, l'outremer, le bleu de Prusse, la phtalocyanine, le dioxyde de titane et le noir de carbone.

7. Produit selon la revendication 5 ou 6, dans lequel le colorant est présent dans un pourcentage compris entre 0 et 10 % en poids.

8. Produit selon la revendication 7, dans lequel le colorant est présent dans un pourcentage compris entre 0 et 8 % en poids.

9. Produit selon la revendication 7 ou 8, dans lequel le colorant est présent dans un pourcentage compris entre 0 et 6 % en poids, de préférence entre 1 et 4 % en poids.

10. Produit selon l'une quelconque des revendications précédentes, où le produit est un produit pour salle de bains choisi parmi un lavabo, un bidet, des toilettes (WC), un bac de douche, un urinoir, une baignoire, ou un produit pour cuisines choisi parmi un évier, un plan de travail et une table de cuisson.
